# EUROPEAN PATENT APPLICATION

(11) **EP 1 548 048 A1**
(43) Date of publication of application: **29.06.2005**
(21) Application number: 04027546.3
(22) Date of filing: 19.11.2004
(51) Int. Cl.: C08G 63/85

(54) **Polyesters with good color tone, process for producing the same and use thereof**

(30) Priority: 26.12.2003 JP 2003432753
(71) Applicant: Shinkong Synthetic Fibers Corporation, Taipei (TW)
(72) Inventor: Zhuang, Yong-Yuan, Chung-Li City (TW); Chen, Ta-Ching, Chung-Ho City Taipei Hsien (TW)
(74) Representative: Becker Kurig Straus

(57) **Abstract**

The present invention relates to a polyester with good color tone prepared by using a catalyst stabilizing system comprising 1) a polymerization catalyst containing a titanium-containing compound of formula (I) as below:

(MeₙO)ₓ•(TiO₂)_{y}•(H₂O)_{z} (I)

and a zinc-containing compound, 2) a toner containing a compound of formula (II) as below: 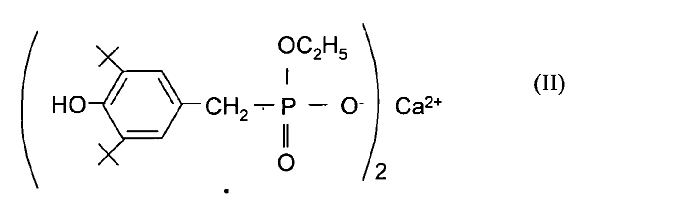 and a cobalt-containing compound, and 3) one or more hindered phenolic antioxidants as stabilizer; to a catalyst stabilizing system for improving the color tone of a polyester; to a process for producing a polyester with good color tone; and to a hollow shaped container prepared from said polyester.

## Description

### FIELD OF THE INVENTION

The present invention relates to a polyester with good color tone prepared by using a catalyst stabilizing system, to a catalyst stabilizing system for improving the color tone of a polyester, to a process for producing a polyester with good color tone, and to a hollow shaped container prepared from said polyester.

### BACKGROUND OF THE INVENTION

Generally, polyesters, particularly polyethylene terephthalate (hereinafter referred to as "PET"), exhibit superior characters including mechanical strength, chemical stability and hygienic performance, etc., and also are inexpensive and light weight. These polyesters have been widely used in various applications, such as packing containers, films and fiber, etc.

It is known that these polyesters may be obtained by either direct esterification or transesterification. For example, the preparation of PET, in general, comprises previously feeding a dicarboxylic acid or derivatives thereof, such as teterephthalic acid (hereinafter referred to as "TPA") or dimethyl terephthalate (hereinafter referred to as "DMT"), and an aliphatic diol, such as ethylene glycol (hereinafter referred to as "EG"), followed by the addition of polymerization catalyst(s), and melt polymerization at elevated temperature under vacuum. In addition, in order to increase the molecular weight of the polyesters as well as to decrease acid value and the amount of acetaldehyde (hereinafter referred to as "AA"), it is desired to further carry out solid-phase polymerization after the completion of the melt polymerization.

In the past, PET was produced by using an antimony-containing compound, such as an antimonous oxide and antimony acetate, etc., as a polymerization catalyst. However, after the manufacture of containers for beverages from PET, it is questionable whether the residual antimony compound from the containers would leach into the beverage at an elevated temperature. Furthermore, antimony itself is a heavy metal and may cause the problem of environmental pollution. To solve this problem, it is desired to avoid using an antimony-containing compound as polymerization catalyst and to replace it with other antimony-free compounds.

Antimony-free catalysts for the production of polyesters mainly include germanium-containing and titanium-containing compounds. The germanium-containing compounds are expensive, and therefore, increase the cost of the manufacture of polyesters. Hence, germanium-containing compounds are seldom used recently. In the past, an organic titanium compound, such as tetrabutyl titanate, was used as a polymerization catalyst. However, under the melt polymerization of long duration at an elevated temperature, the polyester polymers prepared therefrom may be cleaved by heat, whereby the chain between molecules will be cleaved as well as the amounts of vinyl ester radical and carboxyl radical will increase. Due to the formation of the vinyl ester, the polyesters are yellowed. Furthermore, during the post-processing, such as injection, extrusion or spinning, the polyesters readily become yellowed due to the cleavage of molecular chains by thermal oxidation.

To solve the above problems, several methods are tried. For example, Japanese Patent Nos. 43-25827, 43-18609, 49-13234 and 51-19477 have disclosed processes for improving the yellowing of polyesters by adding phosphorus-containing compounds; and Japanese Patent No. 47-18119, Japanese Publication Nos. 51-595 and 51-46394 have disclosed processes for improving the yellowing of polyesters by adding cobalt-containing compounds as a toner. However, said known methods do not significantly improve the yellowing of polyesters. Furthermore, due to the presence of phosphorus-containing compounds, the decreased activity of titanium compounds may result in the extension of the polymerization duration. Although the incorporation of titanium compounds and cobalt compounds may reduce the yellowness of polyesters, the transparency of polyesters will be largely decreased. Hence, it is obvious that said known methods cannot achieve the purposes of inhibiting the cleavage of the polyesters by heat or by thermal oxidation. In addition, in accordance with the conventional methods comprising using either heat stabilizers or toners, the problems of yellowing and oxidative deterioration of polyesters cannot fully be solved.

Hence, the inventors of the present invention surprisingly find a novel catalyst stabilizing system for improving the color tone of a polyester. The above problems may be solved by using this system. A polyester with good color tone may therefore be obtained. Particularly, the polyester prepared therefrom is suitable for the manufacture of containers (such as a hollow container, etc.), films and fibers, etc.

### SUMMARY OF THE INVENTION

Accordingly, the object of the present invention is to provide a polyester with good color tone, particularly polyethylene terephthalate (hereinafter referred to as "PET") with good color tone, and a process for preparing said polyester. The further object of the present invention is to provide a novel catalyst stabilizing system for the production of said polyester. Another object of the present invention is to provide a hollow shaped container prepared from said polyester.

### DETAILED DESCRIPTION OF THE INVENTION

The polyester with good color tone according to the present invention can be prepared by using a novel catalyst stabilizing system, wherein the novel catalyst stabilizing system comprises:
1) a polymerization catalyst, containing
   a) a titanium-containing compound of formula (I):

      (MeₙO)ₓ·(TiO₂)_{y}·(H₂O)_{z} (I)

      in which
      Me represents a metal selected from the group consisting of alkali metals and alkali earth metals,
      n is 1 or 2,
      x is from 0.0001 to 6,
      y is 1, and
      z is 0.01 to 2; and
   b) a zinc-containing compound;
2) a toner, containing
   a) a compound of formula (II): 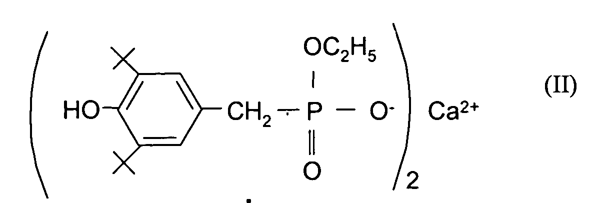 and
   b) a cobalt-containing compound; and
3) one or more hindered phenolic antioxidants as stabilizer.

According to the present invention, 1-a) a titanium-containing compound of formula (I) defined as above in combination with 1-b) a zinc-containing compound forms a mixed catalyst for polymerizing the polyester. Preferably, the titanium-containing compound is an inorganic titanium compound of formula (I), where Me represents a metal selected from Li, Na, K, Rb or Cs when n is 2, or where Me represents a metal selected from Mg, Ca, Sr or Ba when n is 1. Most preferably, the titanium-containing compound of formula (I) is sodium titanate, particularly Hombifast PC commercially available from SACHTLEBEN CHEMIE GMBH. Preferably, 1-b) a zinc-containing compound is selected from the group consisting of zinc acetate, zinc oxide and zinc chloride, or a mixture thereof.

Further, in accordance with the present invention, it is preferred that 1-a) a titanium-containing compound contains 3 to 30 ppm of titanium element, and 1-b) a zinc-containing compound contains 10 to 100 ppm of zinc element, wherein the titanium and zinc elements are in a total amount of 5 to 120 ppm. In the case that the amount of titanium element in 1-a) a titanium-containing compound is less than 3 ppm or the amount of zinc element in 1-b) a zinc-containing compound is less than 10 ppm or the total amount of said titanium and zinc elements is less than 5 ppm, the polymerization rate is relatively slow. On the other hand, in the case that the amount of titanium element in 1-a) a titanium-containing compound is more than 30 ppm or the amount of 1-b) a zinc element in zinc-containing compound is more than 100 ppm or the total amount of said titanium and zinc elements is more than 120 ppm, the resultant polyester tends to be yellowish.

According to the present invention, 2-a) a phosphorous-containing compound of formula (II) defined as above in combination with 2-b) a cobalt-containing compound forms a toner composition. Preferably, said phosphorous-containing compound of formula (II) is IRGANOX 1425 commercially available from Ciba-Geigy Corporation. Preferably, 2-b) a cobalt-containing compound is selected from the group consisting of cobalt acetate, cobalt chloride, cobalt formate, cobalt terephthalate, cobalt nitrate, cobalt sulfate and ammonium cobalt chloride.

In accordance with the present invention, it is preferred that the toner is added in mixed form of 2-a) a compound of formula (II) with 2-b) a cobalt-containing compound. According to the present invention, it is preferred that 2-a) a compound of formula (II) is added in an amount of 0.005 to 0.25 % by weight and 2-b) a cobalt-containing compound is added in an amount of 0.001 to 0.015 % by weight, and the total amount of the compound of formula (II) and cobalt-containing compound is in the range of 0.005 to 0.3 % by weight. In the case that the compound of formula (II) is added in an amount of less than 0.005 % by weight or the cobalt-containing compound is added in an amount of less than 0.001 % by weight or the compound of formula (II) and the cobalt-containing compound are added in a total amount of less than 0.005 % by weight, the resultant polyester tends to be yellowish. In addition, if the compound of formula (II) is added in an amount of more than 0.25 by weight, the color tone of the resultant polyester is not improved and the cost of the production of the polyester increases. If the cobalt-containing compound is added in an amount of more than 0.015 % by weight or if the compound of formula (II) and the cobalt-containing compound are added in a total amount of more than 0.3 % by weight, the resultant polyester tends to be dark color (i.e. lower L-value) and the cost of the production of the polyester also increases.

According to the present invention, 3) one or more hindered phenolic antioxidants are selected from the group consisting of
2,2-methylene bis(4-methyl-6-tert-butylphenol), particularly Antioxidant 2246 commercially available from Cyanamid Company,
2,6-bis(2'-hydroxyl-3'-tert-butyl-5'-methylbenzyl)-4-cresol, particularly Antioxidant 80 commercially available from Cyanamid Company,
2,2'-methylene bis(4-ethyl-6-tert-butylphenol), particularly Antioxidant 425 commercially available from Cyanamid Company,
2,5-di-tert-butyl hydroquinone, particularly Ionol commercially available from Shell Company;
tetrakis (methylene-3-(3,5-di-tert-butyl-4-hydroxyphenyl)-propionate) methane, particularly Irganox 1010 commercially available from Ciba-Geigy Corporation., and
4,4-butylidene-(6-tert-butyl-m-cresol), particularly Santowhite Powder commercially available from Monsanto Company.

In accordance with the present invention, 3) hindered phenolic antioxidants are added in an amount of from 0.005 to 0.2 % by weight. If the hindered phenolic antioxidants are added in an amount of less than 0.005 % by weight, the resulting polyester is readily cleaved by thermal oxidation during post-processing and tends to be yellowed. If the hindered phenolic antioxidants are added in an amount of more than 0.2 % by weight, the yellowness of the resultant polyester is not further improved and the cost of the production of the polyester increases.

According to the present invention, the resultant polyester prepared by polymerizing dicarboxylic acids or esters thereof with diols has excellent heat stability and thermal oxidation stability, whereby said polyester has a good color tone during the melt polymerization and post-processing (such as injection, etc.).

In accordance with the present invention, it is preferred that the polyester of the present invention comprises 90 % by weight or above of a polyester, particularly PET.

According to the present invention, the further object thereof is to provide a novel catalyst stabilizing system for improving the color tone of polyesters, comprises:
1) a polymerization catalyst, containing
   a) a titanium-containing compound of formula (I):

      (MeₙO)ₓ·(TiO₂)_{y}·(H₂O)_{z} (I)

      in which
      Me represents a metal selected from the group consisting of alkali metals and alkali earth metals,
      n is 1 or 2,
      x is from 0.0001 to 6,
      y is 1, and
      z is 0.01 to 2; and
   b) a zinc-containing compound;
2) a toner, containing
   a) a compound of formula (II): 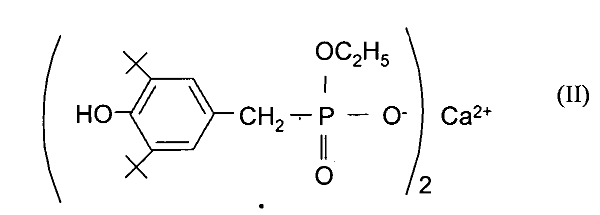 and
   b) a cobalt-containing compound; and
3) one or more hindered phenolic antioxidants as stabilizer.

In the novel catalyst stabilizing system of the present invention, 1-a) a titanium-containing compound of formula (I) defined as above in combination with 1-b) a zinc-containing compound forms a mixed catalyst for the polymerization of the polyester. Preferably, the titanium-containing compound is an inorganic titanium compound of formula (I), where Me represents a metal selected from Li, Na, K, Rb or Cs when n is 2, or where Me represents a metal selected from Mg, Ca, Sr or Ba when n is 1. Most preferably, the titanium-containing compound of formula (I) is sodium titanate, particularly Hombifast PC commercially available from SACHTLEBEN CHEMIE GMBH. Preferably, 1-b) a zinc-containing compound is selected from the group consisting of zinc acetate, zinc oxide and zinc chloride, or a mixture thereof.

Further, in accordance with the present invention, it is preferred that 1-a) a titanium-containing compound contains 3 to 30 ppm of titanium element, and 1-b) a zinc-containing compound contains 10 to 100 ppm of zinc element, wherein the titanium and zinc elements are in a total amount of 5 to 120 ppm. In the case that the amount of the titanium element in 1-a) a titanium-containing compound is less than 3 ppm or the amount of the zinc element in 1-b) a zinc-containing compound is less than 10 ppm or the total amount of said titanium and zinc elements is less than 5 ppm, the polymerization rate is relatively slow. On the other hand, in the case that the amount of the titanium element in 1-a) a titanium-containing compound is more than 30 ppm or the amount of the zinc element in 1-b) a zinc-containing compound is more than 100 ppm or the total amount of said titanium and zinc elements is more than 120 ppm, the resultant polyester tends to be yellowish.

According to the present invention, 2-a) a phosphorous-containing compound of formula (II) in combination with 2-b) a cobalt-containing compound forms a toner composition. Preferably, said phosphorous-containing compound of formula (II) is IRGANOX 1425 commercially available from Ciba-Geigy Corporation. Preferably, 2-b) a cobalt-containing compound is selected from the group consisting of cobalt acetate, cobalt chloride, cobalt formate, cobalt terephthalate, cobalt nitrate, cobalt sulfate and ammonium cobalt chloride.

In accordance with the present invention, it is preferred that the toner is added in mixed form of 2-a) a compound of formula (II) with 2-b) a cobalt-containing compound. According to the present invention, 2-a) a compound of formula (II) is added in an amount of 0.005 to 0.25 % by weight and 2-b) a cobalt-containing compound is added in an amount of 0.001 to 0.015 % by weight, and the total amount of the compound of formula (II) and cobalt-containing compound is in the range of 0.005 to 0.3 % by weight. In the case that the compound of formula (II) is added in an amount of less than 0.005 % by weight or the cobalt-containing compound is added in an amount of less than 0.001 % by weight or the compound of formula (II) and titanium and the cobalt-containing compound are added in a total amount of less than 0.005 % by weight, the resultant polyester tends to be yellowish. In the other hand, if the compound of formula (II) is added in an amount of more than 0.25 % by weight, the color tone of the resultant polyester is not improved and the cost of the production of the polyester increases. If the cobalt-containing compound is added in an amount of more than 0.015 % by weight or if the compound of formula (II) and the cobalt-containing compound are added in a total amount of more than 0.3 % by weight, the resultant polyester tends to be dark color (i.e. lower L-value) and the cost of the production of the polyester increases.

According to the present invention, 3) one or more hindered phenolic antioxidants are selected from the group consisting of
2,2-methylene bis(4-methyl-6-tert-butylphenol), particularly Antioxidant 2246 commercially available from Cyanamid Company,
2,6-bis(2'-hydroxyl-3'-tert-butyl-5'-methylbenzyl)-4-cresol, particularly Antioxidant 80 commercially available from Cyanamid Company,
2,2'-methylene bis(4-ethyl-6-tert-butylphenol), particularly Antioxidant 425 commercially available from Cyanamid Company,
2,5-di-tert-butyl hydroquinone, particularly Ionol commercially available from Shell Compony,
tetrakis (methylene-3-(3,5-di-tert-butyl-4-hydroxyphenyl)-propionate) methane, particularly Irganox 1010 commercially available from Ciba-Geigy Corp., and
4,4-butylidene-(6-tert-butyl-m-cresol), particularly Santowhite Powder commercially available from Monsanto Company.

In accordance with the present invention, 3) hindered phenolic antioxidants are added in an amount of from 0.005 to 0.2 % by weight. If the hindered phenolic antioxidants are added in an amount of less than 0.005 % by weight, the resulting polyester is readily cleaved by thermal oxidation during post-processing and tends to be yellowed. If the hindered phenolic antioxidants are added in an amount of more than 0.2 % by weight, the yellowness of the resultant polyester is not further improved and the cost of the production of the polyester increases.

According to the present invention, the process for producing a polyester with good color tone, comprising using a catalyst stabilizing system defined as above.

In the present invention, the objective polyester may be obtainable from a dicarboxylic acid or an ester thereof and a diol via conventional ways, such as esterification and transesterification etc., either in the presence of or in the absence of catalyst. The catalyst of the transesterification is a metal compound selected from the group consisting of alkali metals, alkali earth metals, zinc, manganese, titanium, etc The reaction of the esterification and transesterification is preferably carried out at a temperature of from 150°C to 250°C. Preferably, when the esterification or transesterification conversion percentage is up to 90 % or above, the catalyst stabilizing system of the present invention is added into the reaction mixture, followed by slow reduction of the reaction pressure to 1 mmHg or below within 30 minutes, and elevation of the reaction temperature to a range of from 250°C to 300°C, and the polymerization is carried out.

In accordance with the present invention, it is preferred that a polymerization catalyst 1), a toner 2) and a stabilizer 3) in the catalyst stabilizing system of the present invention are separately added into the polymerization process. The polymerization catalyst 1) may be added at any time point during the preparation of polyesters. For examples, said components may be added at the beginning of reaction (such as esterification or transesterification, etc.) or before the end of polymerization. Considering that the addition of the toner at the esterification or transesterification stage may cause the contamination of reaction tank and the addition of the toner at the later stage of polymerization may extend the time required for polymerization, it is preferable to add the toner at the time point between the end of the reaction and the early stage of polymerization.

In addition, the hinder phenolic antioxidant 3) may be added at any time point during the preparation of polyesters. For example, the hinder phenolic antioxidant 3) may be added at any time point between the commencement of esterification or transesterification to the end of polymerization.

The polyester obtained according to the present invention may be heated in flowing inert gas or under high vacuum to carry out solid-phase polymerization. As the intrinsic viscosity (IV) of polyester pellets is increased to a range of from 0.7 to 1.2 dl/g, the polyester is then processed by extrusion, injection or extrusion-blowing to obtain various types of articles, such as sheets, films or bottles, etc. This polyester may also be spun, extended or post-treated to obtain filaments or staples.

In the production of the polyester of the present invention, additives may be optionally added alone or in combination, such as pigments, mat agents, fluorescent whitening agents, heat stabilizers, ultra-violet absorbers, antistatic agents, ether inhibitors (such as organic amines or organic carboxylic amine, etc.).

The polyester prepared according to the present invention exhibits excellent heat stability, thermal oxidation stability, as well as has good color tone during the polymerization (such as melt polymerization, etc.) or during the post-processing stage (such as injection molding, etc.).

Accordingly, the polyester of the present invention may be used in the manufacture of shaped articles, such as containers, particularly a hollow shaped container, films or fibers, etc., thereby imparting good color tone and excellent heat stability to said articles.

### EXAMPLES

The present invention will be described in further detail with reference to Examples. However, the present invention is by no means restricted by the following examples. Any modifications that do not depart from the spirit of the present invention should be understood to fall within the scope of the present invention.

In the Examples and Comparative Examples, the characters of the polyester prepared were determined in accordance with the following methods.
1. Intrinsic viscosity (IV)
   0.8 g of the resulting polyester was dissolved in 10 ml of o-chlorophenol at a constant temperature of 25°C. The viscosity was measured by Ubbelohde viscosmeter.
2. Color tone
   The Color L-value (transparency), a-value (red-green color shade) and b-value (yellow-blue color shade) of the resulting polyester were measured by TOPSCAN MODEL TC-1800 MK II Color Analyzer. The larger the L-value is, the higher the transparency is. In addition, when a-value is positive, the color shade tends to be reddish. On the other hand, when a-value is negative, the color shade tends to be greenish. Further, when b-value is positive, the color shade tends to be yellowish. When b-value is negative the color shade tends to be bluish.
3. The contents of titanium element and zinc element
   2.5 g of the resulting polyester was ashed and decomposed by oxygenated water in the presence of sulfuric acid, and then the polyester solution was diluted into a volume of 50 ml. Quantitative analysis was carried out by means of a plasma emission spectroscopic analysis via ICP-AES "JY46P Model" (high frequency, a device-bonded plasma emission spectroscopic analyzer) manufactured by JOBIN YVON Company.
4. The evaluation of thermal oxidation stability
   The resulting polyester pellet was put into a heat oven, and was heated for 10 minutes at 160°C to crystallize prior to the heat test. Subsequently, to perform the heat test, the polyester was heated at 200°C for additional 6 hours. The change of b-value (Δb) was determined.

### Example 1

43.24 kg of terephthalic acid (TPA) and 19.40 kg of ethylene glycol (EG) were previously stirred into a homogenous slurry. Then, the slurry was introduced at a rate 0.35 kg/min under normal pressure into a 120 liter stainless reaction tank where 50 kg of polyester prepolymer had been previously charged. Esterification was performed at 245°C. When the conversion rate is up to 98%, 50 kg of the polyester prepolymer was left in said tank and the rest were transferred into another 100 liter polymerization tank. Into the resulting polyester prepolymer, a mixed polymerization catalyst containing 33 ppm of Hombifast PC (manufactured by SACHTLEBEN CHEMIE GMBH) and 200 ppm of zinc acetate, a toner containing 700 ppm of Irganox 1425 (manufactured by Ciba-Geigy Corporation) and 100 ppm of cobalt acetate, and 0.1 % Irganox 1010 (manufactured by Ciba-Geigy Corporation) as the antioxidant were added, separately. The reaction pressure was slowly reduced to 1 mmHg at a rate of 25 mmHg/min. Meanwhile, the temperature is elevated to 280°C. After the polymerization for 2 hours, the polyester was cooled and pelleted. The resulting polyester pellet has IV of 0.58 dl/g, Color L/a/b of 52.9/-0.6/-1.0, and has good color tone.

Subsequently, the polyester pellet was put into a heat oven and then is heated for 6 hours at 200°C to carry out the heat test. The difference of b-vaslue (Δb) between before and after the heat test was determined and the thermal oxidation stability was evaluated. As the result, the resulting polyester pellet has Δb value of 4.6 and has excellent thermal oxidation stability.

### Examples 2 to 8

The productions of polyesters were carried out in the same manner as described in Example 1 except that the amounts of Irganox 1425, cobalt acetate, Hombifast PC and zinc acetate were adjusted as listed in Table 1. The results and qualities of the resultant polyesters are shown in Table 1.

### Examples 9

42.38 kg of terephthalic acid (TPA), 0.86 kg of isophthalic acid (IPA) and 19.04 kg of ethylene glycol (EG) were previously stirred into homogenous slurry. Then, the slurry was introduced at a rate of 0.35 kg/min under normal pressure into a 120 liter stainless reaction tank where 50 kg of polyester prepolymer containing 2.0 mol.% of IPA had been previously charged. Esterification was performed at 245°C. When the conversion rate is up to 98%, 50 kg of the polyester prepolymer was left in said tank and the remains were transferred into another 100 liter polymerization tank. Into the resulting polyester prepolymer, a mixed polymerization catalyst containing 33 ppm of Hombifast PC (manufactured by SACHTLEBEN CHEMIE GMBH) and 200 ppm of zinc acetate, a toner containing 700 ppm of Irganox 1425 (manufactured by Ciba-Geigy Corp.) and 100 ppm of cobalt acetate, and 0.1 % of Irganox 1010 (manufactured by Ciba-Geigy Corp.) as the antioxidant were added, separately. The reaction pressure was slowly reduced to 1 mmHg at a rate of 25 mmHg/min. Meanwhile, the temperature was elevated to 280°C. After the polymerization for 2 hours, the polyester was cooled and pelleted. The resulting polyester pellet has IV of 0.58 dl/g, Color L/a/b of 53.2/-0.8/-1.0, and has good color tone.

Subsequently, the polyester pellet was put into a heat oven and heated for 6 hours at 200°C to carry out the heat test. The difference of b-value (Δb) between before and after the heat test was determined and the thermal oxidation stability was evaluated. As a result, the resulting polyester pellet has Δb value of 4.8 and has excellent thermal oxidation stability.

### Example 10

The polyester pellet prepared by Example 9 was converted into the polyester having IV of 0.88 dl/g by solid-phase polymerization in the presence of a dowtherm vacumn dryer at 220°C under a higher vacuum of 1 mmHg. Then, the resulting polyester was injected into bottle preforms by CM machine. Said preforms were then blown into bottles by SIDEL machine. The bottles thus obtained have good color tone (Color L/a/b: 54.2/-0.3/-0.6) and higher transparency.

### Comparative Examples 1 to 15

The preparation of polyesters was carried out in the same manner as in Example 1 except that the amounts of Hombifast PC, zinc acetate, Irganox 1425, cobalt acetate and Irganox 1010 were changed as listed in Table 2. The results and quality of the resultant polyesters are shown in Table 2.

### Comparative Example 16

The polyester pellet prepared by Comparative Example 15 was converted into the polyester having IV of 0.88 dl/g by solid-phase polymerization in the presence of a dowtherm vacumn dryer at 220°C under a higher vacuum of 1 mmHg. The resulting polyester was injected into bottle preforms by CM machine. Said preforms were then blown into bottles by SIDEL machine. The bottles thus obtained tends to be yellowish (Color L/a/b: 59.6/-2.1/+6.0).

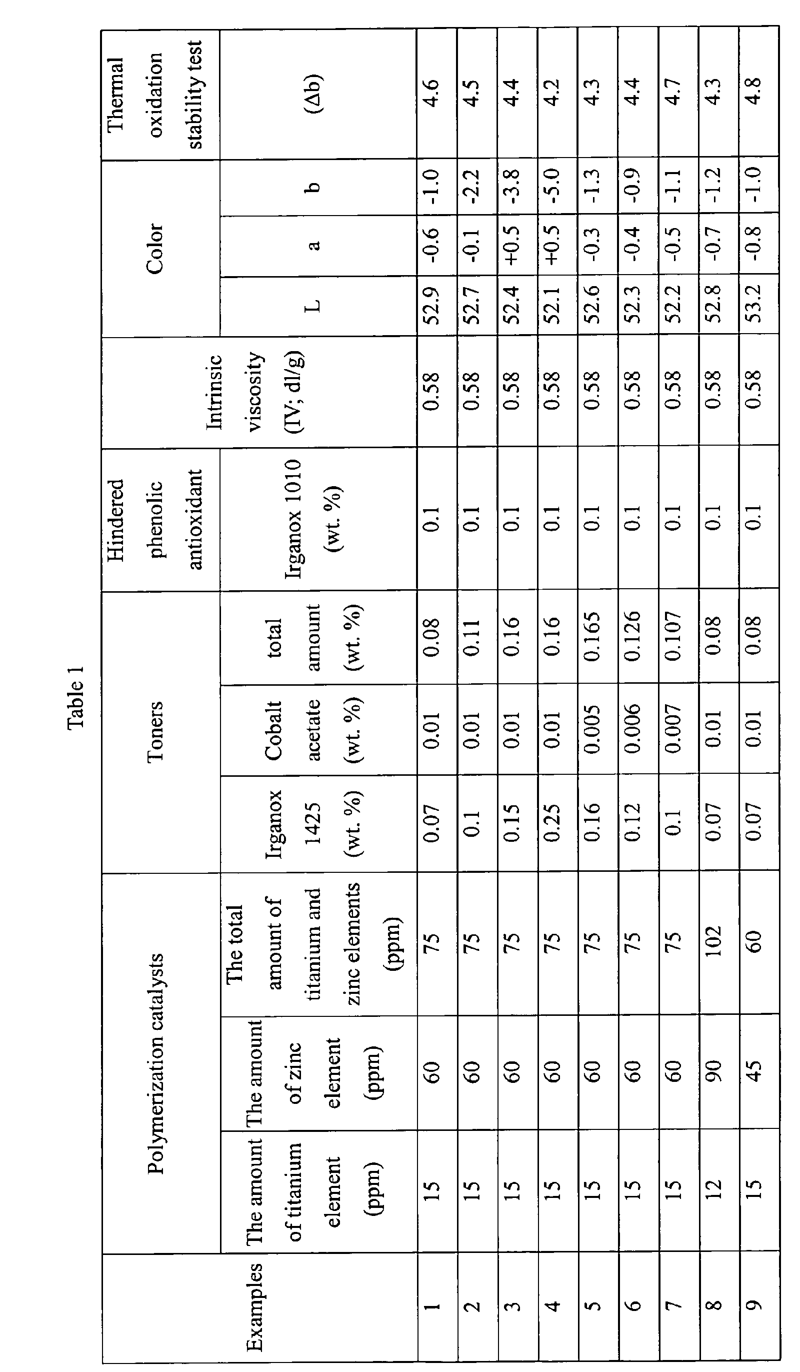

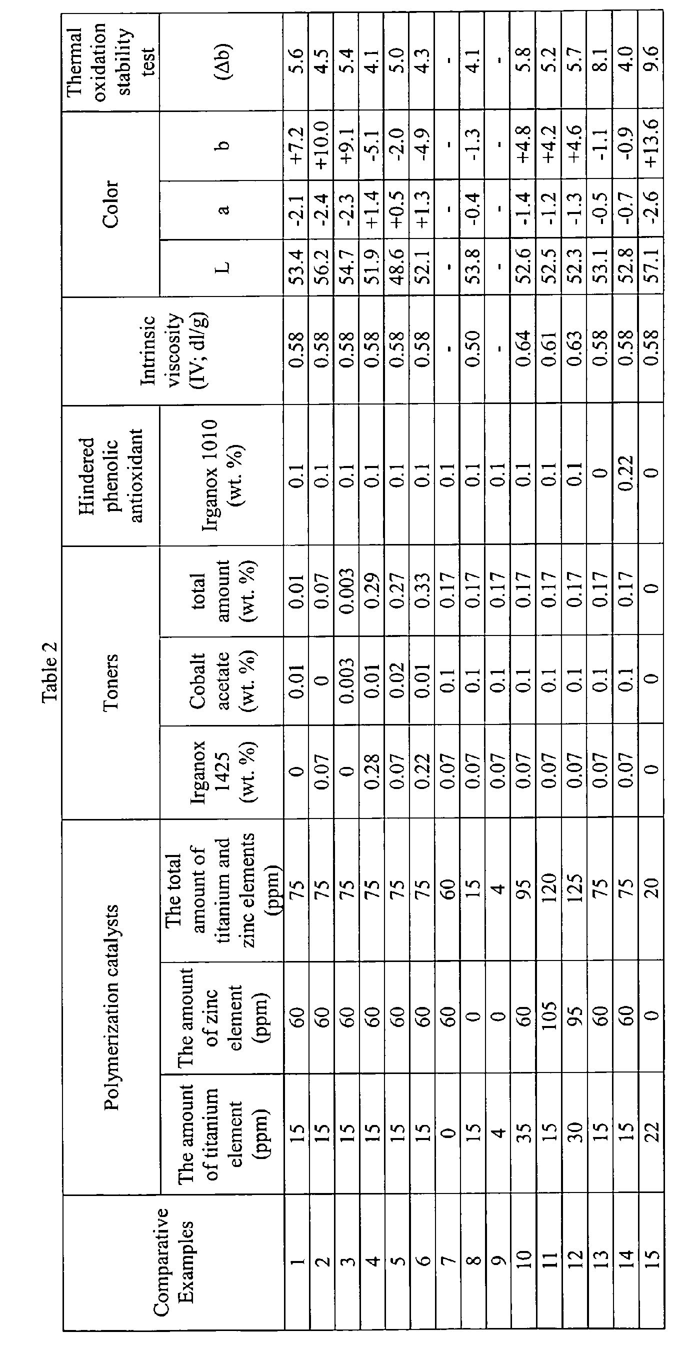

With respect to the property of color tone, the polyester obtained by Comparative Examples 1, 3, 10-12 and 15 have yellowish color. The polyester obtained by Comparative Examples 4 and 6 have a bluish color and the cost of the production thereof increases. The polyester obtained by Comparative Example 5 tends to be a dark color. However, according to the present, the polyester obtained by Examples 1 to 9 exhibits good color tone. As a result, the bottles prepared therefrom, as described in Example 10, have not only good color tone, but also higher transparency.

The cost of the production of the polyester described in Comparative Example 14 increases. In Comparative Example 2, the color of the polyester thus prepared is not improved as Irganox 1425 was added alone.

In addition, the polymerization performance is poor in Comparative Examples 7 and 9. In Comparative Example 8, the polymerization rate is relatively slow, thereby the intrinsic viscosity of the polyester is lower. Further, the thermal oxidation stability of the polyester obtained by Comparative Examples 13 and 15 is poor. However, according to the present invention, the resulting polyesters exhibit good thermal oxidation stability.

## Claims

1. A polyester with good color tone, which is prepared by using a catalyst stabilizing system, comprising:
1) a polymerization catalyst, containing
a) a titanium-containing compound of formula (I):
(MeₙO)ₓ·(TiO₂)_{y}·(H₂O)_{z} (I)
in which
Me represents a metal selected from the group consisting of alkali metals and alkali earth metals,
n is 1 or 2,
x is from 0.0001 to 6,
y is 1, and
z is 0.01 to 2; and
b) a zinc-containing compound;
2) a toner, containing
a) a compound of formula (II): 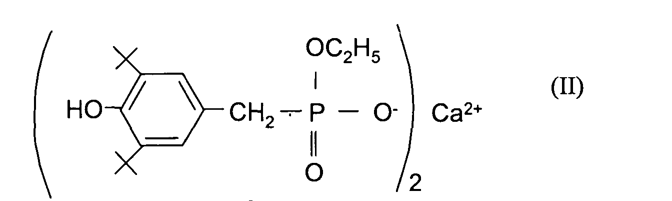 and
b) a cobalt-containing compound; and
3) one or more hindered phenolic antioxidants as stabilizer.

2. A polyester according to claim 1, wherein Me represents a metal selected from Li, Na, K, Rb or Cs, when n is 2.

3. A polyester according to claim 1, wherein Me represents a metal selected from Mg, Ca, Sr or Ba, when n is 1.

4. A polyester according to claim 1, wherein 1-a) a titanium-containing compound of formula (I) is sodium titanate.

5. A polyester according to claim 1, wherein 1-b) a zinc-containing compound is selected from the group consisting of zinc acetate, zinc oxide and zinc chloride, or a mixture thereof.

6. A polyester according to claim 1, wherein 2-b) a cobalt-containing compound is selected from the group consisting of cobalt acetate, cobalt chloride, cobalt formate, cobalt terephthalate, cobalt nitrate, cobalt sulfate and ammonium cobalt chloride.

7. A polyester according to claim 1, wherein 3) one or more hindered phenolic antioxidants are selected from the group consisting of
2,2-methylene bis(4-methyl-6-tert-butylphenol),
2,6-bis(2'-hydroxyl-3'-tert-butyl-5'-methylbenzyl)-4-cresol,
2,2'-methylene bis(4-ethyl-6-tert-butylphenol),
2,5-di-tert-butyl hydroquinone,
tetrakis (methylene-3-(3,5-di-tert-butyl-4-hydroxyphenyl)-propionate) methane, and 4,4-butylidene-(6-tert-butyl-m-cresol).

8. A polyester according to claim 1, wherein 1-a) a titanium-containing compound of formula (I) contains titanium element in an amount of from 3 to 30 ppm.

9. A polyester according to claim 1, wherein 1-b) a zinc-containing compound contains zinc element in an amount of from 10 to 100 ppm.

10. A polyester according to claim 1, wherein the total amount of titanium element in 1-a) a titanium-containing compound and zinc elements in 1-b) a zinc-containing compound is from 5 to 120 ppm.

11. A polyester according to claim 1, wherein 2-a) a compound of formula (II) is in an amount of from 0.005 to 0.25 % by weight.

12. A polyester according to claim 1, wherein 2-b) a cobalt-containing compound is in an amount of from 0.001 to 0.015 % by weight.

13. A polyester according to claim 1, wherein the total amount of 2-a) a compound of formula (II) and 2-b) a cobalt-containing compound is from 0.005 to 0.3 % by weight.

14. A polyester according to claim 1, wherein 3) hindered phenolic antioxidants are in an amount of from 0.005 to 0.2 % by weight.

15. A catalyst stabilizing system for improving the color tone of a polyester, comprising:
1) a polymerization catalyst, containing
a) a titanium-containing compound of formula (I):
(MeₙO)ₓ·(TiO₂)_{y}·(H₂O)_{z} (I)
in which
Me represents a metal selected from the group consisting of alkali metals and alkali earth metals,
n is 1 or 2,
x is from 0.0001 to 6,
y is 1, and
z is 0.01 to 2; and
b) a zinc-containing compound;
2) a toner, containing
a) a compound of formula (II): 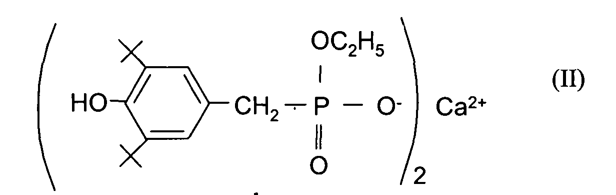 and
b) a cobalt-containing compound; and
3) one or more hindered phenolic antioxidants as stabilizer.

16. A catalyst stabilizing system according to claim 15, wherein Me represents a metal selected from Li, Na, K, Rb or Cs, when n is 2.

17. A catalyst stabilizing system according to claim 15, wherein Me represents a metal selected from Mg, Ca, Sr or Ba, when n is 1.

18. A catalyst stabilizing system according to claim 15, wherein 1-a) a titanium-containing compound of formula (I) is sodium titanate.

19. A catalyst stabilizing system according to claim 15, wherein 1-b) a zinc-containing compound is selected from the group consisting of zinc acetate, zinc oxide and zinc chloride, or a mixture thereof.

20. A catalyst stabilizing system according to claim 15, wherein 2-b) a cobalt-containing compound is selected from the group consisting of cobalt acetate, cobalt chloride, cobalt formate, cobalt terephthalate, cobalt nitrate, cobalt sulfate and ammonium cobalt chloride.

21. A catalyst stabilizing system according to claim 15, wherein 3) one or more hindered phenolic antioxidants are selected from the group consisting of
2,2-methylene bis(4-methyl-6-tert-butylphenol),
2,6-bis(2'-hydroxyl-3'-tert-butyl-5'-methylbenzyl)-4-cresol,
2,2'-methylene bis(4-ethyl-6-tert-butylphenol),
2,5-di-tert-butyl hydroquinone,
tetrakis (methylene-3-(3,5-di-tert-butyl-4-hydroxyphenyl)-propionate) methane, and 4,4-butylidene-(6-tert-butyl-m-cresol).

22. A catalyst stabilizing system according to claim 15, wherein 1-a) a titanium-containing compound of formula (I) contains titanium element in an amount of from 3 to 30 ppm.

23. A catalyst stabilizing system according to claim 15, wherein 1-b) a zinc-containing compound contains zinc element in an amount of from 10 to 100 ppm.

24. A catalyst stabilizing system according to claim 15, wherein the total amount of titanium element in 1-a) a titanium-containing compound and zinc elements in 1-b) a zinc-containing compound is from 5 to 120 ppm.

25. A catalyst stabilizing system according to claim 15, wherein 2-a) a compound of formula (II) is in an amount of from 0.005 to 0.25 % by weight.

26. A catalyst stabilizing system according to claim 15, wherein 2-b) a cobalt-containing compound is in an amount of from 0.001 to 0.015 % by weight.

27. A catalyst stabilizing system according to claim 15, wherein the total amount of 2-a) a compound of formula (II) and 2-b) a cobalt-containing compound is from 0.005 to 0.3 % by weight.

28. A catalyst stabilizing system according to claim 15, wherein 3) hindered phenolic antioxidants are in an amount of from 0.005 to 0.2 % by weight.

29. A process for producing a polyester with good color tone, **characterized in that** a catalyst stabilizing system is used, wherein said system comprises:
1) a polymerization catalyst, containing
a) a titanium-containing compound of formula (I):
(MeₙO)ₓ·(TiO₂)_{y}·(H₂O)_{z} (I)
in which
Me represents a metal selected from the group consisting of alkali metals and alkali earth metals,
n is 1 or 2,
x is from 0.0001 to 6,
y is 1, and
z is 0.01 to 2; and
b) a zinc-containing compound;
2) a toner, containing
a) a compound of formula (II): 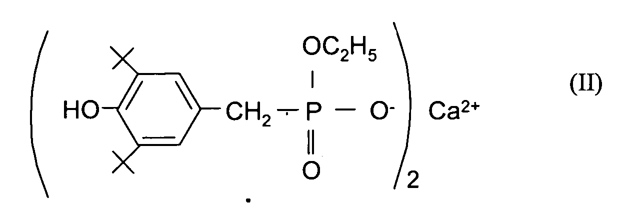 and
b) a cobalt-containing compound; and
3) one or more hindered phenolic antioxidants as stabilizer.

30. An article, prepared from a polyester according to any one of claims 1 to 14.

31. An article according to claim 30, which is a container, a film, a sheet or a fiber.

32. An article according to claim 30 or 31, which is a hollow shaped container.
